# EUROPÄISCHE PATENTSCHRIFT

(11) **EP 1 242 538 B1**
(45) Veröffentlichungstag und Bekanntmachung des Hinweises auf die Patenterteilung: **08.09.2004**
(21) Anmeldenummer: 00983233.8
(22) Anmeldetag: 06.12.2000
(51) Int. Cl.: C08L 81/06, C08L 77/00, C08K 3/00

(54) **THERMOPLASTISCHE FORMMASSEN MIT VERBESSERTEM VERARBEITUNGSVERHALTEN AUF BASIS VON POLYARYLENETHERSULFONEN UND POLYAMIDEN**
POLYARYLETHERSULPHONE AND POLYAMIDE-BASED THERMOPLASTIC MOULDABLE MASSES WITH IMPROVED PROCESSING CHARACTERISTICS
MATIERES MOULABLES THERMOPLASTIQUES A COMPORTEMENT AU TRAITEMENT AMELIORE A BASE DE POLYARYLENE-ETHER-SULFONES ET DE POLYAMIDES

(30) Priorität: 16.12.1999 DE 19961040
(43) Veröffentlichungstag der Anmeldung: 25.09.2002
(73) Patentinhaber: BASF AKTIENGESELLSCHAFT, 67056 Ludwigshafen (DE)
(72) Erfinder: WEBER, Martin, 67487 Maikammer (DE); QUEISSER, Joachim, 68165 Mannheim (DE)
(86) Internationale Anmeldenummer: PCT/EP2000/012278
(87) Internationale Veröffentlichungsnummer: WO 2001/044370

(56) Entgegenhaltungen:
- EP-A- 0 477 757
- PATENT ABSTRACTS OF JAPAN vol. 010, no. 390 (C-394), 26. Dezember 1986 (1986-12-26) & JP 61 179816 A (RES INST ELECTRIC MAGNETIC ALLOYS), 12. August 1986 (1986-08-12)

## Beschreibung

Die vorliegende Erfindung betrifft Formmassen, die
- A): 1 bis 98,8 Gew.-% mindestens eines Polyarylenethersulfons,
- B): 1 bis 98,8 Gew.-% mindestens eines thermoplastischen Polyamids,
- C): 0,1 bis 60 Gew.-% mindestens eines Füllstoffs,
- D): 0 bis 40 Gew.-% mindestens eines schlagzähmodifizierenden Kautschuks,
- E): 0 bis 40 Gew.-% eines oder mehrerer unterschiedlicher Zusatzstoffe und
- F): 0,1 bis 30 Gew.-% mindestens eines thermotropen Polymers enthalten,
wobei die Gewichtsprozente der Komponenten A bis F zusammen 100% ergeben und sich die Formmassen dadurch auszeichnen, daß die Komponente B eine Viskositätszahl von 180 bis 350 ml/g (gemessen in 0,5 gew.-%iger Lösung in 96 gew.-%iger Schwefelsäure gemäß DIN 53 727) aufweist.

Darüber hinaus betrifft die vorliegende Erfindung die Verwendung dieser Formmassen zur Herstellung von Formteilen, Folien und Fasern sowie die Formteile, Folien und Fasern daraus.

Formmassen auf der Basis von Polyarylenethersulfonen und Polyamiden sind hinlänglich bekannt. Solche Formmassen weisen üblicherweise gegenüber reinen Polyarylenethersulfonen verbesserte Fließeigenschaften auf.

Blends aus Polyarylenethersulfonen und Polyamiden mit mindestens 50 Gew.-% Hexamethylenterephthalamideinheiten waren aus der EP-A 477 757 bekannt. Als weitere Komponenten dieser Blends werden unter anderen thermoplastische flüssigkristalline vollaromatische Polyester genannt. Bevorzugt werden in den genannten Blends Polyamide mit Viskositätszahlen von bis zu 140 ml/g (entspricht η_{red} 1,4 dl/g), da die Polyamide mit höheren Viskositätszahlen auch hohe Schmelzeviskositäten aufweisen und sich die daraus hergestellten Blends nur schwer verarbeiten lassen.

Die deutsche Patentarmeldung mit dem Aktenzeichen 19839331.8 beschreibt Blends aus Polyarylenethersulfonen und Polyamiden mit Viskositätszahlen von mindestens 180 ml/g, die zusätzlich Stabilisatoren auf Basis kupferbromid oder Kupferiodid enthalten. Diese Blends weisen nur eine geringe Verschlechterung der mechanischen Eigenschaften bei dauerhaft hohen Temperaturbelastungen auf.

Der vorliegenden Erfindung lag die Aufgabe zugrunde, thermoplastische Formmassen auf Basis von Polyarylenethersulfonen und Polyamiden zur Verfügung zu stellen, die bei guten mechanischen Eigenschaften eine verbesserte Fließfähigkeit und Verarbeitungsstabilität, insbesondere Schmelzestabilität, aufweisen.

Diese Aufgabe wird von den eingangs definierten Formmassen, die im folgenden näher beschrieben sind, erfüllt.

### Komponente A

Die erfindungsgemäßen Formmassen enthalten die Komponente A in Mengen von 1 bis 98,8, insbesondere von 7,5 bis 92,19 Gew.-%, und besonders bevorzugt von 10 bis 88,49 Gew.-% bezogen auf das Gesamtgewicht von A bis F.

Als Komponente A wird erfindungsgemäß ein Polyarylenethersulfon eingesetzt. Es können auch Mischungen aus zwei oder mehreren unterschiedlichen Polyarylenethersulfonen als Komponente A eingesetzt werden.

Die Arylengruppen der Polyarylenethersulfone A können gleich oder verschieden sein und unabhängig voneinander einen aromatischen Rest mit 6 bis 18 C-Atomen bedeuten. Beispiele geeigneter Arylenreste sind Phenylen, Bisphenylen, Terphenylen, 1,5-Naphthylen, 1,6-Naphthylen, 1,5-Anthrylen, 9,10-Anthrylen oder 2,6-Anthrylen. Darunter werden 1,4-Phenylen und 4,4'-Biphenylen bevorzugt. Vorzugsweise sind diese aromatischen Reste nicht substituiert. Sie können jedoch einen oder mehrere Substituenten tragen. Geeignete Substituenten sind beispielsweise Alkyl-, Arylalkyl-, Aryl-, Nitro-, Cyano- oder Alkoxygruppen sowie Heteroaromaten wie Pyridin und Halogenatome. Zu den bevorzugten Substituenten zählen Alkylreste mit bis zu 10 Kohlenstoffatomen wie Methyl, Ethyl, i-Propyl, n-Hexyl, i-Hexyl, C₁- bis C₁₀-Alkoxyreste wie Methoxy, Ethoxy, n-Propoxy, n-Butoxy, Arylreste mit bis zu 20 Kohlenstoffatomen wie Phenyl oder Naphthyl sowie Fluor und Chlor.

Des weiteren sind Substituenten bevorzugt, die durch Reaktion der Polyarylenethersulfone mit einer reaktiven Verbindung, die neben einer C-C-Doppel- oder -Dreifachbindung eine bzw. mehrere Carbonyl-, Carbonsäure-, Carboxylat-, Säureanhydrid, Säureamid-, Säureimid-, Carbonsäureester-, Amino-, Hydroxyl-, Epoxi-, Oxazolin-, Urethan-, Harnstoff-, Lactam- oder Halogenbenzylgruppen enthält, erhältlich sind. Die Arylengruppen der Polyarylenethersulfone können neben -SO₂-, z.B. über -O-, -S-, -SO-, -CO-, -N=N-, -COO-, einen Alkylenrest, der gewünschtenfalls substituiert sein kann, oder eine chemische Bindung miteinander verknüpft sein.

Bevorzugte erfindungsgemäß brauchbare Polyarylenethersulfone (Komponente A) sind aufgebaut aus wiederkehrenden Einheiten der Formel I 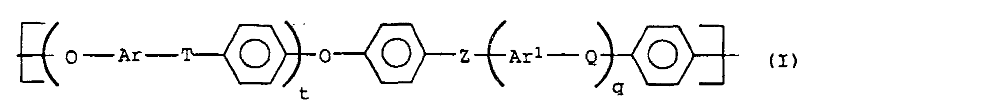 worin
t und q unabhängig voneinander für 0, 1, 2 oder 3 stehen,
Q, T, und Z unabhängig voneinander jeweils eine chemische Bindung oder eine Gruppe, ausgewählt unter -O-, -S-, -SO₂-, S=O, C=O, -N=N-, -R^{a}C=CR^{b}- und -CR^{c}R^{d}-, bedeuten, wobei
   R^{a} und R^{b} unabhängig voneinander jeweils für ein Wasserstoffatom oder eine C₁-C₁₂-Alkylgruppe stehen und
   R^{c} und R^{d} unabhängig voneinander jeweils für ein Wasserstoffatom oder eine C₁-C₁₂-Alkyl-, C₁-C₁₂-Alkoxy- oder C₆-C₁₈-Arylgruppe stehen, wobei R^{c} und R^{d}, wenn sie für eine Alkyl-, Alkoxy- oder Arylgruppe stehen, unabhängig voneinander mit Fluor- und/oder Chloratomen substituiert sein können oder wobei R^{c} und R^{d} zusammen mit dem C-Atom an das sie gebunden sind, eine C₃-C₁₂-Cycloalkylgruppe bilden können, die mit einer oder mehreren C₁-C₆-Alkylgruppen substituiert sein kann,
   mit der Maßgabe, daß mindestens eine der Gruppen T, Q und Z für -SO₂- steht und, wenn t und q für 0 stehen, Z für -SO₂- steht,
Ar und Ar¹ unabhängig voneinander jeweils für eine C₆-C₁₈-Arylengruppe steht, wobei diese mit C₁-C₁₂-Alkyl-, C₆-C₁₈-Aryl-, C₁-C₁₂-Alkoxygruppen oder Halogenatomen substituiert sein kann.

Es können auch verschiedene Einheiten der Formel I statistisch oder in Blöcken verteilt im Polyarylenethersulfon vorliegen.

Die Herstellung erfindungsgemäß brauchbarer Polyarylenether A kann beispielsweise in Anlehnung an GB 1 152 035 und US 4,870,153 erfolgen, worauf hiermit ausdrücklich Bezug genommen wird. Geeignete Verfahrensbedingungen zur Synthese von Polyarylenethersulfonen sind beispielsweise in EP-A- 0 113 112 und EP-A- 0 135 130 beschrieben. Besonders geeignet ist die Umsetzung der Monomeren in aprotischen polaren Lösungsmitteln in Gegenwart von wasserfreiem Alkalicarbonat. Eine besonders bevorzugte Kombination ist N-Methylpyrrolidon als Lösungsmittel und Kaliumcarbonat als Katalysator. Die Umsetzung in der Schmelze ist ebenfalls bevorzugt. Beispiele für geeignete Polyarylenethersulfone A sind solche, mit mindestens einer der folgenden wiederkehrenden Struktureinheiten I₁ bis I₁₅:

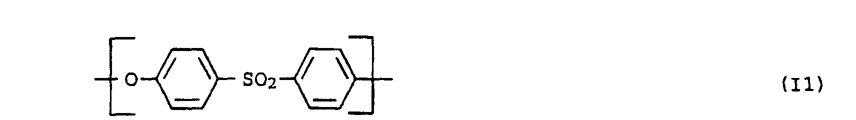

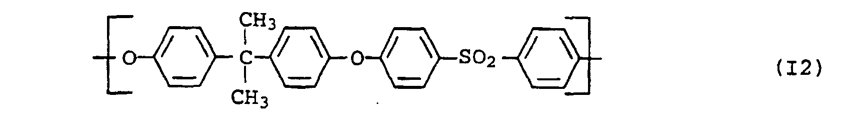

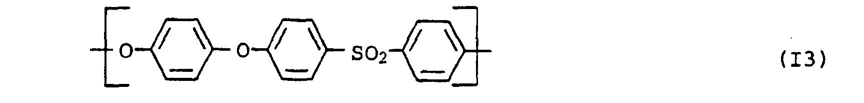

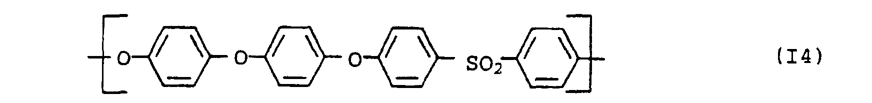

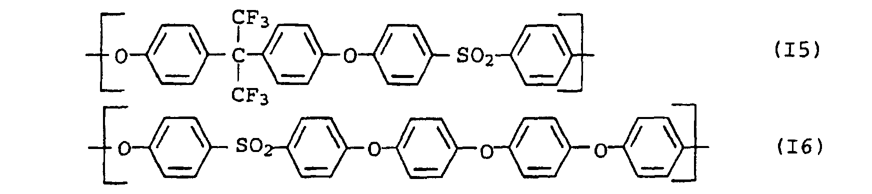

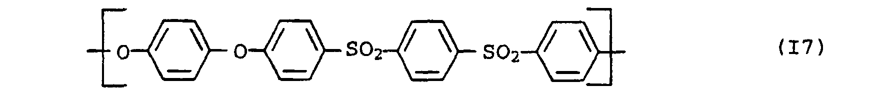

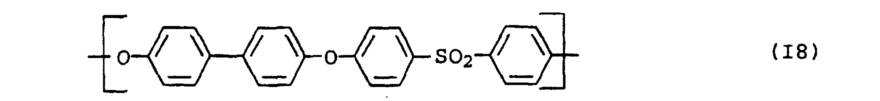

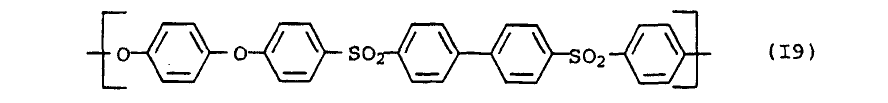

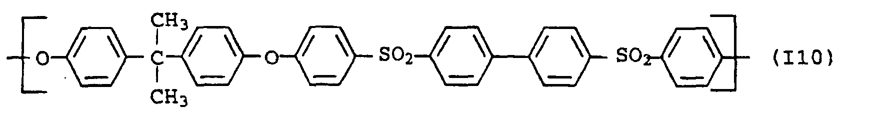

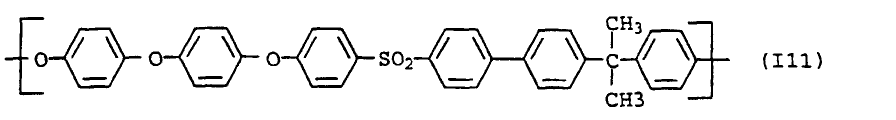

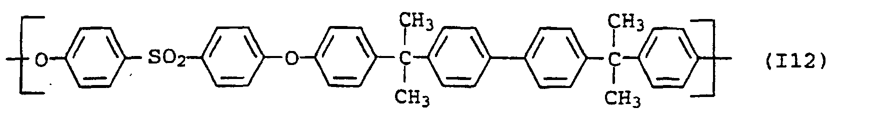

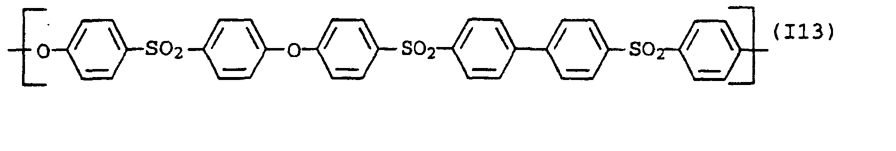

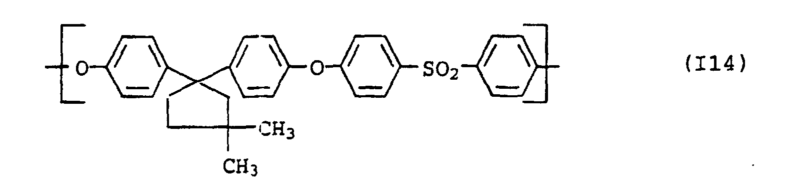

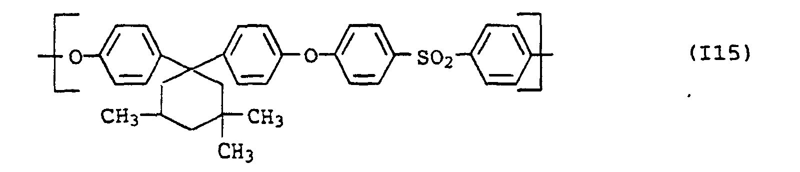

Als besonders bevorzugte Einheiten der Formel I sind Einheiten der Formeln I₁ und I₂ zu nennen, welche einzeln oder im Gemisch vorliegen können.

Je nach Synthesebedingungen können die Polyarylenethersulfone unterschiedliche Gruppen aufweisen. Diese Gruppen können an Atome der Polymerkette gebunden sein oder als Endgruppen der Polymerkette vorliegen. Unter den Gruppen sind solche, die sich gegenüber der Komponente B inert verhalten und solche, die mit den Polyamiden B, insbesondere den Amino- und Carboxylgruppen, reagieren können.

Zu den inerten Gruppen zählen Halogen-, insbesondere Chlor-, Alkoxy-, vor allem Methoxy- oder Ethoxy-, Aryloxy- bevorzugt Phenoxy oder Benzyloxygruppen. Als Beispiele für reaktive Gruppen sind Hydroxy-, Amino-, Anhydrid-, Epoxy- oder Carboxylgruppen zu nennen. Darunter sind Polyarylenethersulfone mit Amino-, Anhydrid oder Epoxyendgruppen oder deren Mischungen besonders bevorzugt.

Gemäß einer Ausführungsform enthalten die erfindungsgemäßen Formmassen Polyarylenethersulfone A, die im wesentlichen frei von reaktiven Gruppen sind. Es können jedoch nach einer bevorzugten Ausführungsform auch Mischungen verschiedener Polyarylenethersulfone mit inerten und reaktiven Gruppen eingesetzt werden. Der Anteil der Polyarylenethersulfone mit reaktiven Gruppen kann von 2 bis 98, bevorzugt von 5 bis 50 Gew.-%, bezogen auf die Komponente A, betragen.

Besonders geeignet als Komponente A ist eine Mischung aus mindestens einem Polyarylenethersulfon a1 mit Gruppen, die sich gegenüber den Polyamiden B inert verhalten, und mindestens einem Polyarylenethersulfon a2, das Gruppen enthält, die mit den Polyamiden B reagieren können.

Als besonders geeignete Gruppen der Polyarylenethersulfone a2 seien Anhydrid-, Carboxyl-, Epoxid- oder Aminogruppen oder Mischungen davon genannt.

Zu den bevorzugten Polyarylenethersulfonen, insbesondere in Mischung mit Polyarylenethersulfonen, die inerte Gruppen enthalten, zählen nach einer Ausführungsform Carboxylgruppen-haltige Polyarylenethersulfone mit wiederkehrenden Strukturelementen der Formeln I und II 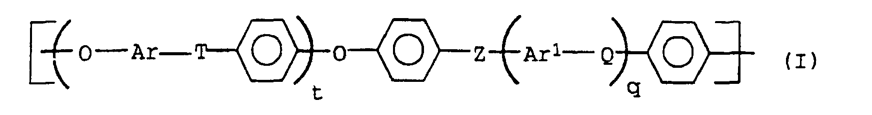 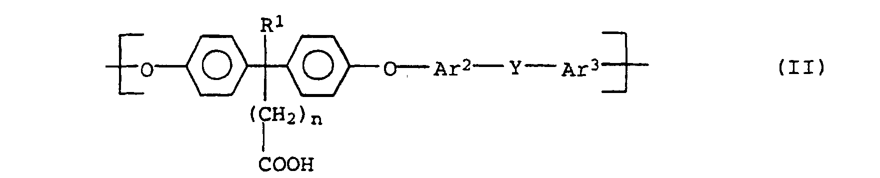 worin die Variablen und Reste die oben angegebenen Bedeutungen haben und darüberhinaus
R¹ für H, C₁-C₆-Alkyl, oder -(CH₂)ₙ-COOH steht,
n für eine ganze Zahl von 0 bis 6 steht,
Ar² und Ar³ unabhängig voneinander jeweils für eine C₆-C₁₈-Arylengruppe steht, wobei diese mit einer oder mehreren C₁-C₁₂-Alkyl-, C₆-C₁₈-Aryl-, C₁-C₁₂-Alkoxygruppen oder Halogenatomen substituiert sein kann, und
Y eine chemische Bindung oder eine Gruppe, ausgewählt unter -O-, -S-, -SO₂-, S=O, C=O, -N=N-, -R^{a}C=CR^{b}- und -CR^{c}R^{d}-, bedeutet.

Beispielsweise sind diese Carboxylgruppen enthaltenden Polyarylenether zugänglich in Anlehnung an die EP-A-0 185 237 sowie nach den von I.W. Parsons et al., in Polymer, 34, 2836 (1993) und T. Koch, H. Ritter, in Macromol. Phys. 195, 1709 (1994) beschriebenen verfahren.

Beispiele für geeignete Strukturelemente II sind: 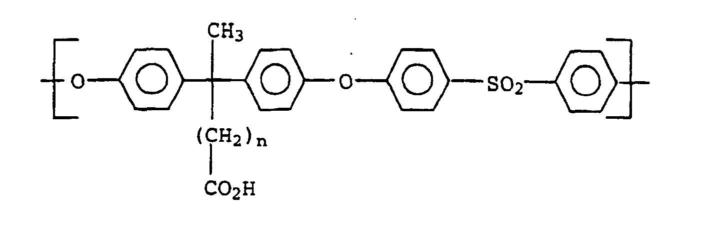 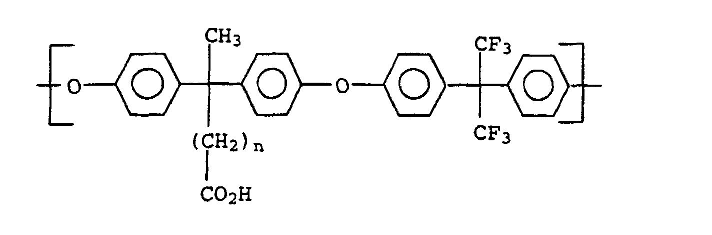 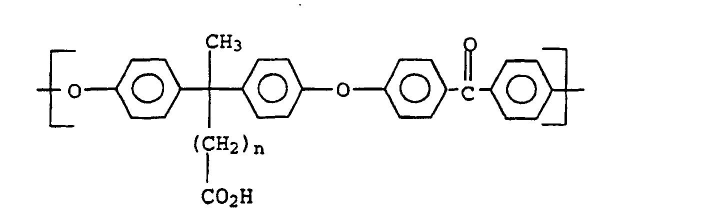 worin n jeweils für 0, 1, 2, 3, 4, 5 oder 6 steht.

Die säuregruppenhaltigen Polyarylenethersulfone weisen Viskositätszahlen von etwa 15 bis 80 ml/g auf (bestimmt in 1%iger NMP-Lösung bei 25°C). Wenn diese säuregruppenhaltigen Polyarylenethersulfone eingesetzt werden, beträgt der Anteil freier Säuregruppen in der Komponente A bevorzugt 0,05 bis 25, vorzugsweise 0,1 bis 20 und insbesondere 0,1 bis 15 Mol-%, wobei die Bestimmung des Anteils an Säuregruppen, wie bei I.W. Parsons et al., Polymer, 34, 2836 (1993) beschrieben, durch ¹H-NMR erfolgt.

Polyarylenethersulfone A mit Hydroxyendgruppen können beispielsweise durch geeignete Wahl des molaren Verhältnisses zwischen Dihydroxy- und Dichlormonomeren hergestellt werden (siehe z.B. McGrath et a1 Polym. Eng. Sci. 17, 647 (1977); Elias "Makromoleküle" 4. Aufl. (1981) Seiten 490 bis 493, Hütig & Wepf.-Verlag, Basel).

Polyarylenethersulfone A, die Aminoendgruppen aufweisen können z.B. dadurch erhalten werden, daß z.B. p-Aminophenol während der Polymerisation zugegen ist (J.E. Mc. Grath, Polymer 30, 1552 (1989)).

Die Herstellung von Anhydridendgruppen enthaltenden Polyarylenethersulfonen ist z.B. in der DE-A 44 29 107 beschrieben. Ebenfalls geeignete Polyarylenethersulfone, die mit Anhydriden gepfropft sind, können wie in EP-A 513 488 beschrieben hergestellt werden.

Polyarylenethersulfone mit Epoxidendgruppen lassen sich aus Polyarylenethersulfonen mit OH-Endgruppen herstellen. Hierzu können letztere beispielsweise mit geeigneten Verbindungen, die Propylenoxidgruppen aufweisen oder aus denen Propylenoxidgruppen zugänglich sind, bevorzugt Epichlorhydrin, umgesetzt werden.

Die Umsetzung der hydroxyterminierten Polyarylenethersulfone mit Epichlorhydrin findet bevorzugt bei Temperaturen im Bereich von 30 bis 200°C in einem Lösungsmittel statt. Als Lösungsmittel eignen sich dabei z.B. ein aliphatisches oder aromatisches Sulfoxid oder Sulfon oder auch N-Methylpyrrolidon. In der Regel wird die Reaktion in schwach basischem Milieu durchgeführt, um einer Ringöffnung der Epoxigruppen möglichst vorzubeugen.

Die Polyarylenethersulfone A können auch Co- oder Blockcopolymere sein, in denen Polyarylenethersulfonsegmente und Segmente von anderen thermoplastischen Polymeren, wie Polyestern, aromatischen Polycarbonaten, Polyestercarbonaten, Polysiloxanen, Polyimiden oder Polyetherimiden vorliegen. Die Molekulargewichte (Zahlenmittel) der Blöcke- bzw. der Pfropfarme in den Copolymeren liegen in der Regel im Bereich von 1 000 bis 30 000 g/mol. Die Blöcke unterschiedlicher Struktur können alternierend oder statistisch angeordnet sein. Der Gewichtsanteil der Polyarylenethersulfone in den Co- oder Blockcopolymeren beträgt im allgemeinen mindestens 10 Gew.-%. Der Gewichtsanteil der Polyarylenethersulfone kann bis zu 97 Gew.-% betragen. Bevorzugt werden Co- oder Blockcopolymere mit einem Gewichtsanteil an Polyarylenethersulfonen mit bis zu 90 Gew.-%. Besonders bevorzugt werden Co- oder Blockcopolymere mit 20 bis 80 Gew.-% Polyarylenethersulfonen.

Im allgemeinen weisen die Polyarylenethersulfone mittlere Molekulargewichte Mₙ (Zahlenmittel) im Bereich von 5 000 bis 60 000 g/mol und relative Viskositäten von 0,20 bis 0,95 dl/g auf. Die relativen Viskositäten werden je nach Löslichkeit der Polyarylenethersulfone entweder in 1 gew.-%iger N-Methylpyrrolidon-Lösung, in Mischungen aus Phenol und Dichlorbenzol oder in 96%iger Schwefelsäure bei jeweils 20°C bzw. 25°C gemessen.

### Komponente B

Die erfindungsgemäßen Formmassen enthalten die Komponente B in Mengen von 1 bis 98,8, insbesondere von 7,5 bis 92,19 Gew.-%, besonders bevorzugt von 10 bis 88,49 Gew.-%, bezogen auf das Gesamtgewicht von A bis F.

Als Komponente B werden erfindungsgemäß ein oder mehrere thermoplastische Polyamide verwendet, die eine Viskositätszahl von 180 bis 350, besonders bevorzugt 190 bis 350, insbesondere 190 bis 240 ml/g (gemessen in 0,5 gew.-%iger Lösung in 96 gew.-%iger Schwefelsäure gemäß DIN 53 727) aufweisen.

Geeignete Polyamide können als halbkristalline oder amorphe Harze mit einem Molekulargewicht M_{w} (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben sind, vorliegen.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Polyamide B können z.B. durch Kondensation äquimolarer Mengen einer gesättigten oder einer aromatischen Dicarbonsäure mit 4 bis 16 Kohlenstoffatomen mit einem gesättigten oder aromatischen Diamin, welches bis 16 Kohlenstoffatome aufweist, oder durch Kondensation von ω-Aminocarbonsäuren bzw. Polyaddition von entsprechenden Lactamen hergestellt werden.

Erfindungsgemäß geeignete Polyamide sind auch aliphatische (Co)polyamide.

Als Dicarbonsäuren von aliphatischen Polyamiden sind insbesondere Alkandicarbonsäuren mit 6 bis 12, insbesondere 6 bis 10 Kohlenstoffatomen geeignet. Hier seien nur Adipinsäure, Suberinsäure, Azelainsäure, Sebacinsäure und Dodecandisäure als in Frage kommende Säuren genannt.

Als Diamine von aliphatischen Polyamiden eignen sich bevorzugt Alkandiamine mit 4 bis 12, insbesondere 4 bis 8 Kohlenstoffatomen, z.B. 1,4-Butandiamin, 1,5-Pentandiamin oder Piperazin, sowie als cyclische Diamine beispielsweise Di-(4-aminocyclohexyl)-methan oder 2,2-Di-(4-aminocyclohexyl)-propan.

Als polyamidbildende Monomere für aliphatische Polyamide kommen selbstverständlich auch Aminocarbonsäuren bzw. die entsprechenden Lactame mit z.B. 6 bis 13 Kohlenstoffatomen in Betracht. Geeignete Monomere dieses Typs sind beispielsweise Caprolactam, Capryllactam, Önanthlactam, ω-Aminoundecansäure oder Laurinlactam.

Beispiele für bevorzugte aliphatische Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide wie Polycaprolactam, Polylaurinsäurelactam ferner Poly-11-aminoundecansäure und ein Polyamid aus Di(p-aminocyclohexyl)-methan und Dodecandisäure sowie Copolyamide 6/66, insbesondere mit einem Anteil von 5 bis 95 Gew.-% an Caprolactam-Einheiten.

Außerdem seien auch noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

In einer bevorzugten Ausführungsform der Erfindung werden teilaromatische Polyamide verwendet. Diese können durch Copolykondensation von z.B. Adipinsäure, Isophthalsäure und/oder Terephthalsäure mit Hexamethylendiamin oder von Caprolactam, Terephthalsäure mit Hexamethylendiamin hergestellt werden. Derartige teilaromatische Copolyamide enthalten bevorzugt als Komponente b₁ 20 bis 90 Gew.-% Einheiten, die sich von Terephthalsäure und Hexamethylendiamin ableiten. Ein geringer Anteil der Terephthalsäure, vorzugsweise nicht mehr als 10 Gew.-% der gesamten eingesetzten aromatischen Dicarbonsäuren, können durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, können die teilaromatischen Copolyamide Einheiten, die sich von ε-Caprolactam ableiten (b₂) und/oder Einheiten, die sich von Adipinsäure und Hexamethylendiamin (b₃) ableiten, enthalten.

Der Anteil an Einheiten b₂ die sich von ε-Caprolactam ableiten, beträgt üblicherweise 10 bis 80 Gew.-%, vorzugsweise 20 bis 50 Gew.-%, insbesondere 25 bis 40 Gew.-%, während der Anteil an Einheiten die sich von Adipinsäure und Hexamethylendiamin b₃ ableiten, bis zu 70 Gew.-%, vorzugsweise 30 bis 60 Gew.-% und insbesondere 35 bis 55 Gew.-% beträgt. Die Summe der Gewichtsprozente der Komponenten b₁ bis b₃ ergibt zusammen stets 100.

Bei Copolyamiden, die sowohl Einheiten von ε-Caprolactam als auch Einheiten von Adipinsäure und Hexamethylendiamin enthalten, ist darauf zu achten, daß der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

In einer weiteren Ausführungsform setzt sich die Komponente B zu 40 bis 100, vorzugsweise 50 bis 100 und insbesondere 70 bis 100 Gew.-%, bezogen auf das Gesamtgewicht der Komponente B, aus einem teilaromatischen teilkristallinen thermoplastischen Polyamid zusammen, das aufgebaut ist aus
b'₁) 30 bis 44, vorzugsweise 32 bis 40 und insbesondere 32 bis 38 mol-% Einheiten, welche sich von Terephthalsäure ableiten,
b'₂) 6 bis 20, vorzugsweise 10 bis 18 und insbesondere 12 bis 18 mol-% Einheiten, welche sich von Isophthalsäure ableiten,
b'₃) 43 bis 49,5, vorzugsweise 46 bis 48,5 und insbesondere 46,3 bis 48,2 mol-% Einheiten, welche sich von Hexamethylendiamin ableiten,
b'₄) 0,5 bis 7, vorzugsweise 1,5 bis 4 und insbesondere 1,8 bis 3,7 mol-% Einheiten, welche sich von aliphatischen cyclischen Diaminen mit 6 bis 30, vorzugsweise 13 bis 29 und insbesondere 13 bis 17 C-Atomen ableiten,
wobei die Molprozente der Komponenten b'₁ bis b'₄ zusammen 100 % ergeben.

Die Diamineinheiten b'₃ und b'₄ werden vorzugsweise äquimolar mit den Dicarbonsäureeinheiten b'₁ und b'₂ umgesetzt.

Geeignete Monomere b'₄ sind vorzugsweise cyclische Diamine der Formel (III) 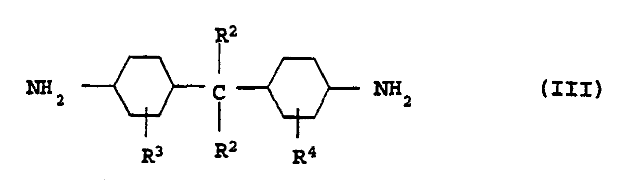 in der
- R²: Wasserstoff oder eine C₁-C₄-Alkylgruppe,
- R³: eine C₁-C₄-Alkylgruppe oder Wasserstoff und
- R⁴: eine C₁-C₄-Alkylgruppe oder Wasserstoff bedeutet.

Bevorzugte Diamine b'₄ sind Bis(4-aminocyclohexyl)-methan, Bis(4-amino-3-methylcyclohexyl)methan, Bis(4-aminocyclohexyl)-2,2'-propan und Bis(4-amino-3-methylcyclohexyl)-2,2'-propan.

Als weitere Monomere b'₄ seien 1,3- und 1,4-Cyclohexandiamin und Isophorondiamin genannt.

Neben den vorstehend beschriebenen Einheiten b'₁ bis b'₄ können die teilaromatischen Copolyamide B bis zu 4, vorzugsweise bis zu 3,5 Gew.-%, bezogen auf B, an weiteren polyamidbildenden Monomeren b'₅ enthalten, wie sie von anderen Polyamiden bekannt sind.

Als weitere polyamidbildende Monomere b'₅ kommen aromatische Dicarbonsäuren in Betracht, die 8 bis 16 Kohlenstoffatome aufweisen. Geeignete aromatische Dicarbonsäuren sind beispielsweise substituierte Terephthal- und Isophthalsäuren wie 3-t-Butylisophthalsäure, mehrkernige Dicarbonsäuren, z. B. 4,4'- und 3,3'-Diphenyldicarbonsäure, 4,4'- und 3,3'-Diphenylmethandicarbonsäure, 4,4'- und 3,3'-Diphenylsulfondicarbonsäure, 1,4-oder 2,6-Naphthalindicarbonsäure und Phenoxyterephthalsäure.

Weitere polyamidbildende Monomere b'₅ können sich von Dicarbonsäuren mit 4 bis 16 Kohlenstoffatomen und aliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin oder Piperazin, als Vertreter der Diamine und Caprolactam, Capryllactam, Önanthlactam, ω-Aminoundecansäure und Laurinlactam als Vertreter von Lactamen bzw. Aminocarbonsäuren genannt.

Teilaromatische Copolyamide B mit Triamingehalten kleiner als 0,5, vorzugsweise kleiner als 0,3 Gew.-% sind bevorzugt.

Copolyamide mit niedrigem Triamingehalt weisen bei gleicher Lösungsviskosität niedrigere Schmelzviskositäten im Vergleich zu Produkten gleicher Zusammensetzung auf, die einen höheren Triamingehalt aufweisen. Dies verbessert sowohl die Verarbeitbarkeit als auch die Produkteigenschaften erheblich.

Die Schmelzpunkte der teilaromatischen Copolyamide liegen im Bereich von 270°C bis 340°C, bevorzugt von 280 bis 330°C, wobei dieser Schmelzpunkt mit einer hohen Glasübergangstemperatur von in der Regel 110°C oder mehr, insbesondere mehr als 130°C (im trockenen Zustand) verbunden ist.

Teilaromatische Copolyamide B zeichnen sich im allgemeinen durch Kristallinitätsgrade > 30 %, bevorzugt > 35 %, und insbesondere > 40 % aus.

Der Kristallinitätsgrad ist ein Maß für den Anteil an kristallinen Fragmenten im Copolyamid und wird durch Röntgenbeugung oder indirekt durch Messung von ΔHₖᵣᵢₛₜ. bestimmt.

Selbstverständlich können auch Mischungen unterschiedlicher teilaromatischer Copolyamide sowie Mischungen aus aliphatischen und teilaromatischen (Co)polyamiden eingesetzt werden, wobei das Mischungsverhältnis jeweils beliebig ist.

Geeignete Verfahren zur Herstellung der Polyamide B sind dem Fachmann bekannt.

Als bevorzugte Herstellweise sei der Batch-Prozeß (diskontinuierliche Herstellweise) genannt. Dabei wird die wäßrige Monomerenlösung innerhalb 0,5 bis 3 h in einem Autoklaven auf Temperaturen von 280 - 340°C erhitzt, wobei ein Druck von 10 - 50, insbesondere 15 - 40 bar erreicht wird, der durch Entspannen von überschüssigem Wasserdampf möglichst konstant bis zu 2 h gehalten wird. Anschließend entspannt man den Autoklaven bei konstanter Temperatur innerhalb eines Zeitraumes von 0,5 - 2 h, bis man einen Enddruck von 1 bis 5 bar erreicht hat. Anschließend wird die Polymerschmelze ausgetragen, abgekühlt und granuliert.

Ein weiteres Verfahren erfolgt in Anlehnung an die in den EP-A 129195 und 129 196 beschriebenen Verfahren. Danach wird z.B. für die Herstellung teilaromatischer Copolyamide eine wäßrige Lösung der Monomeren b'₁) bis b'₄) sowie gegebenenfalls b'₅) mit einem Monomerengehalt von 30 bis 70, vorzugsweise 40 bis 65 Gew.-% unter erhöhtem Druck (1 bis 10 bar) und unter gleichzeitiger Verdampfung von Wasser und Bildung eines Präpolymeren innerhalb von weniger als 60 s auf eine Temperatur von 280 bis 330°C erhitzt, anschließend werden Präpolymere und Dampf kontinuierlich getrennt, der Dampf rektifiziert und die mitgeführten Diamine zurückgeleitet. Schließlich wird das Präpolymer in eine Polykondensationszone geleitet und unter einem Überdruck von 1 bis 10 bar und einer Temperatur von 280 bis 330°C bei einer Verweilzeit von 5 - 30 min. polykondensiert. Es versteht sich von selbst, daß die Temperatur im Reaktor über dem bei dem jeweiligen Wasserdampf-Druck erforderlichen Schmelzpunkt des entstehenden Präpolymeren liegt.

Durch diese kurzen Verweilzeiten wird die Bildung von Triaminen weitgehend verhindert.

Das auf die genannte Weise erhaltene Polyamid-Präpolymere, das in der Regel eine Viskositätszahl von 40 bis 70 ml/g, bevorzugt von 40 bis 60 ml/g, gemessen an einer 0,5 gew.-%igen Lösung in 96 %iger Schwefelsäure bei 25°C, aufweist, wird kontinuierlich aus der Kondensationszone entnommen.

Es ist vorteilhaft, das Polyamid-Präpolymere schmelzflüssig durch eine Austragszone unter gleichzeitiger Entfernung des in der Schmelze enthaltenen Restwassers auszutragen. Geeignete Austragszonen sind beispielsweise Entgasungsextruder. Die vom Wasser befreite Schmelze kann dann in Stränge gegossen und granuliert werden.

Dieses Granulat wird in fester Phase unter Inertgas kontinuierlich oder diskontinuierlich bei einer Temperatur unterhalb des Schmelzpunktes, z.B. von 170 bis 240°C, bis zur gewünschten Viskosität kondensiert. Für die diskontinuierliche Festphasenkondensation können z.B. Taumeltrockner, für die kontinuierliche Festphasenkondensation mit heißem Inertgas durchströmte Temperrohre verwendet werden. Bevorzugt wird die kontinuierliche Festphasenkondensation, wobei als Inertgas Stickstoff oder insbesondere überhitzter Wasserdampf, vorteilhaft der am Kopf der Kolonne anfallende Wasserdampf, verwendet wird.

In einer weiteren Ausführungsform ist es auch möglich, die Komponenten A, C, F und gegebenenfalls D und/oder E schon in den Entgasungsextruder zum Präpolymeren der Komponente B zu geben, wobei in diesem Fall der Entgasungsextruder üblicherweise mit geeigneten Mischelementen, wie Knetblöcken, ausgestattet ist. Anschließend kann ebenfalls als Strang extrudiert, gekühlt und granuliert werden.

### Komponente C

Die erfindungsgemäßen Formmassen enthalten 0,1 bis 60 Gew.-% Verstärkungsmittel oder Füllstoffe. Vorzugsweise sind 0,1 bis 50, insbesondere 1 bis 40 Gew.-% faser- oder teilchenförmige Füllstoffe oder Verstärkungsstoffe oder deren Mischungen in den erfindungsgemäßen Formmassen enthalten. Die Mengenangaben beziehen sich jeweils auf die Gesamtmasse der Komponenten A bis F.

Bevorzugte faserförmige Füll- oder Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte, bevorzugt einer Polyurethanschlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Kohlenstoff- oder Glasfasern können auch in Form von Geweben, Matten oder Glasseidenrovings eingesetzt werden.

Als teilchenförmige Füllstoffe eignen sich amorphe Kieselsäure, Carbonate wie Magnesiumcarbonat (Kreide), gepulverter Quarz, Glimmer, unterschiedlichste Silikate wie Tone, Muskovit, Biotit, Suzoit, Zinnmaletit, Talkum, Chlorit, Phlogophit, Feldspat, Calciumsilikate wie Wollastonit oder Aluminiumsilikate wie Kaolin, besonders kalzinierter Kaolin.

Nach einer besonders bevorzugten Ausführungsform werden teilchenförmige Füllstoffe verwendet, von denen mindestens 95 Gew.-%, bevorzugt mindestens 98 Gew.-% der Teilchen einen Durchmesser (größte Ausdehnung), bestimmt am fertigen Produkt, von weniger als 45 µm, bevorzugt weniger als 40 µm aufweisen und deren sogenanntes Aspektverhältnis im Bereich von 1 bis 25, bevorzugt im Bereich von 2 bis 20 liegt, bestimmt am fertigen Produkt.

Die Teilchendurchmesser können dabei z.B. dadurch bestimmt werden, daß elektronenmikroskopische Aufnahmen von Dünnschnitten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). Der Gewichtsanteil der Füllstoffe, die weniger als 40 µm beträgt kann auch mittels Siebanalyse gemessen werden. Das Aspektverhältnis ist das Verhältnis von Teilchendurchmesser zu Dicke (größter Ausdehnung zu kleinster Ausdehnung).

Besonders bevorzugt werden als teilchenförmige Füllstoffe Talkum, Kaolin, wie calcinierter Kaolin oder Wollastonit oder Mischungen aus zwei oder allen dieser Füllstoffe. Darunter wird Talkum mit einem Anteil von mindestens 95 Gew.-% an Teilchen mit einem Durchmesser von kleiner als 40 µm und einem Aspektverhältnis von 1,5 bis 25, jeweils bestimmt am fertigen Produkt, besonders bevorzugt. Kaolin hat bevorzugt einen Anteil von mindestens 95 Gew.-% an Teilchen mit einem Durchmesser von kleiner als 20 µm und ein Aspektverhältnis von 1,2 bis 20, jeweils bestimmt am fertigen Produkt.

### Komponente D

Optional können die erfindungsgemäßen Formmassen schlagzähmodifizierende Kautschuke D enthalten. Deren Anteil beträgt von 0 bis 40, insbesondere von 0 bis 25 Gew.-%, besonders bevorzugt 0 bis 20 Gew.-%, bezogen auf das Gesamtgewicht von A bis F.

Als Komponente D können auch Mischungen aus zwei oder mehreren unterschiedlichen schlagzähmodifizierenden Kautschuken eingesetzt werden.

Unter Kautschuken sind allgemein vernetzbare Polymere mit bei Raumtemperatur gummielastischen Eigenschaften zu verstehen.

Bevorzugte Kautschuke, die die Zähigkeit der Formmassen erhöhen, weisen üblicherweise zwei wesentliche Merkmale auf: sie enthalten einen elastomeren Anteil, der eine Glasübergangstemperatur von weniger als -10°C, vorzugsweise von weniger als -30°C aufweist, und sie enthalten mindestens eine funktionelle Gruppe, die mit dem Polyamid B bzw. Polyarylensulfon A wechselwirken kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- oder Oxazolingruppen.

Zu den bevorzugten funktionalisierten Kautschuken D zählen funktionalisierte Polyolefinkautschuke, die aus folgenden Komponenten aufgebaut sind:
- d₁): 40 bis 99 Gew.-% mindestens eines α-Olefins mit 2 bis 8 C-Atomen;
- d₂): 0 bis 50 Gew.-% eines Diens;
- d₃): 0 bis 45 Gew.-% eines C₁-C₁₂-Alkylesters der Acrylsäure oder Methacrylsäure oder Mischungen derartiger Ester;
- d₄): 0 bis 40 Gew.-% einer ethylenisch ungesättigten C₂-C₂₀-Mono- oder Dicarbonsäure oder einem funktionellen Derivat einer solchen Säure;
- d₅): 1 bis 40 Gew.-% eines Epoxygruppen enthaltenden Monomeren; und
- d₆): 0 bis 5 Gew.-% sonstiger radikalisch polymerisierbarer Monomerer.

Als Beispiele für geeignete α-Olefine d₁ können Ethylen, Propylen, 1-Butylen, 1-Pentylen, 1-Hexylen, 1-Heptylen, 1-Octylen, 2-Methylpropylen, 3-Methyl-1-butylen und 3-Ethyl-1-butylen genannt werden, wobei Ethylen und Propylen bevorzugt sind.

Als geeignete Dien-Monomere d₂ seien beispielsweise konjugierte Diene mit 4 bis 8 C-Atomen, wie Isopren und Butadien, nicht-konjugierte Diene mit 5 bis 25 C-Atomen, wie Penta-1,4-dien, Hexa-1,4-dien, Hexa-1,5-dien, 2,5-Dimethylhexa-1,5-dien und Octa-1,4-dien, cyclische Diene, wie Cyclopentadien, Cyclohexadiene, Cyclooctadiene und Dicyclopentadien, sowie Alkenylnorbornene, wie 5-Ethyliden-2-norbornen, 5-Butyliden-2-norbornen, 2-Methallyl-5-norbornen, 2-Isopropenyl-5-norbornen und Tricyclodiene, wie 3-Methyltricyclo-(5.2.1.0.2.6)-3,8-decadien, oder deren Mischungen genannt. Bevorzugt werden Hexa-1,5-dien, 5-Ethyliden-norbornen und Dicyclopentadien. Der Diengehalt beträgt im allgemeinen 0 bis 50, vorzugsweise 0,5 bis 50, insbesondere 2 bis 20 und besonders bevorzugt 3 bis 15 Gew.-%, bezogen auf das Gesamtgewicht des Olefinpolymerisats.

Beispiele für geeignete Ester d₃ sind Methyl-, Ethyl-, Propyl-, n-Butyl, i-Butyl- und 2-Ethylhexyl-, Octyl- und Decylacrylate bzw. die entsprechenden Ester der Methacrylsäure. Von diesen werden Methyl-, Ethyl-, Propyl-, n-Butyl- und 2-Ethylhexylacrylat bzw. -methacrylat besonders bevorzugt.

Anstelle der Ester d₃ oder zusätzlich zu diesen können in den Olefinpolymerisaten auch säurefunktionelle und/oder latent säurefunktionelle Monomere ethylenisch ungesättigter Mono- oder Dicarbonsäuren d₄ enthalten sein.

Als Beispiele für Monomere d₄ seien Acrylsäure, Methacrylsäure, tertiäre Alkylester dieser Säuren, insbesondere t.-Butylacrylat und Dicarbonsäuren, wie Maleinsäure und Fumarsäure, oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit 2 bis 20 C-Atomen, insbesondere Maleinsäureanhydrid und tertiäre C₁-C₁₂-Alkylester der vorstehend genannten Säuren, insbesondere t.-Butylacrylat und t.-Butylmethacrylat angeführt.

Ethylenisch ungesättigte Dicarbonsäuren und Anhydride d₄ sind darstellbar durch folgende allgemeine Formeln IV und V:

R⁵(COOR⁶)C = C (COOR⁷)R⁸ (IV)

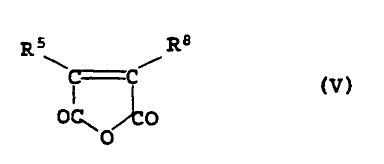

worin R⁵, R⁶, R⁷ und R⁸ unabhängig voneinander für H oder C₁-C₆-Alkyl stehen.

Epoxygruppen tragende Monomere d₅ sind darstellbar durch folgende allgemeine Formeln VI und VII 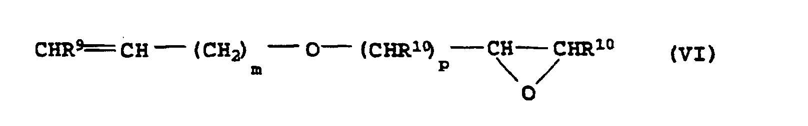 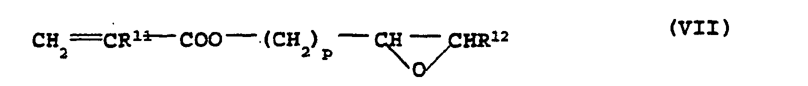 worin R⁹, R¹⁰, R¹¹ und R¹² unabhängig voneinander für H oder C₁-C₆-Alkyl stehen, m eine ganze Zahl von 0 bis 20 und p eine ganze Zahl von 0 bis 10 ist.

Bevorzugt stehen R⁵ bis R¹² für Wasserstoff, m für den Wert 0 oder 1 und p für den Wert 1.

Bevorzugte Verbindungen d₄ bzw. d₅ sind Maleinsäure, Fumarsäure und Maleinsäureanhydrid bzw. Alkenylglycidylether und Vinylglycidylether.

Besonders bevorzugte Verbindungen der Formeln IV und V bzw. VI und VII sind Maleinsäure und Maleinsäureanhydrid bzw. Epoxygruppen-enthaltende Ester der Acrylsäure und/oder Methacrylsäure, insbesondere Glycidylacrylat und Glycidylmethacrylat.

Besonders bevorzugt sind Olefinpolymerisate aus
- 49,9 bis 98,9,: insbesondere 59,85 bis 94,85 Gew.-% Ethylen, und
- 1 bis 50: insbesondere 5 bis 40 Gew.-% eines Esters der Acryl- oder Methacrylsäure
- 0,1 bis 20,0,: insbesondere 0,15 bis 15 Gew.-% Glycidylacrylat und/oder Glycidylmethacrylat, Acrylsäure und/oder Maleinsäureanhydrid.

Besonders geeignete funktionalisierte Kautschuke D sind Ethylen-Methylmethacrylat-Glycidylmethacrylat-, Ethylen-Methylacrylat-Glycidylmethacrylat-, Ethylen-Methylacrylat-Glycidylacrylat- und Ethylen-Methylmethacrylat-Glycidylacrylat-Polymere.

Als sonstige Monomere d₆ kommen z.B. Vinylester oder Vinylether oder deren Mischungen in Betracht.

Die Herstellung der vorstehend beschriebenen Polymere kann nach an sich bekannten Verfahren erfolgen, vorzugsweise durch statistische Copolymerisation unter hohem Druck und erhöhter Temperatur.

Der Schmelzindex der Copolymeren liegt im allgemeinen im Bereich von 1 bis 80 g/10 min (gemessen bei 190°C und 2,16 kg Belastung).

Als weitere Gruppe von geeigneten Kautschuken sind sogenannte Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glasübergangstemperatur von mindestens 25°C, unter einem weichen Bestandteil ein Polymerisat mit einer Glasübergangstemperatur von höchstens 0°C. Diese Produkte weisen eine Struktur aus einem Kern (Pfropfgrundlage) und mindestens einer Schale (Pfropfauflage) auf, wobei sich die Struktur durch die Reihenfolge der Monomerenzugabe ergibt. Die weichen Bestandteile leiten sich i.a. von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischen oligomeren Octamethyltetrasiloxan oder Tetravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester oder Maleinsäure, tertiär-Butyl(meth-)acrylat, Acrylsäure, Glycidyl(meth-)acrylat und Vinyloxazolin. Der Anteil an Monomeren mit funktionellen Gruppen beträgt i.a. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i.a. 1:9 bis 9:1, bevorzugt 3:7 bis 8:2.

Derartige Kautschuke sind an sich bekannt und beispielsweise in der EP-A 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

### Komponente E

Die erfindungsgemäßen Formmassen können als Komponente E Zusatzstoffe wie Verarbeitungshilfsmittel, Pigmente, Stabilisatoren, Flammschutzmittel oder Mischungen unterschiedlicher Additive enthalten. Übliche Zusatzstoffe sind beispielsweise auch Oxidationsverzögerer, Mittel gegen Wärmezersetzung und Zersetzung durch ultraviolettes Licht, Gleit- und Entformungsmittel, Farbstoffe und Weichmacher.

Deren Anteil beträgt erfindungsgemäß von 0 bis zu 40, vorzugsweise von 0,01 bis zu 20 Gew.-%, insbesondere 0,01 bis 15 Gew.-%, bezogen auf das Gesamtgewicht der Komponenten A bis F. Im Fall, daß es sich bei der Komponente E um Stabilisatoren handelt, beträgt der Anteil dieser Stabilisatoren üblicherweise bis zu 2 Gew.-%, vorzugsweise 0,01 bis 1 Gew.-%, insbesondere 0,01 bis 0,5 Gew.-%, bezogen auf das Gesamtgewicht von A bis F.

Pigmente und Farbstoffe sind allgemein in Mengen bis zu 6, bevorzugt 0,5 bis 5 und insbesondere 0,5 bis 3 Gew.-%, bezogen auf die Summe von A bis F, enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 PbCO₃·Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente oder Phthalocyanine erfindungsgemäß eingesetzt werden. Derartige Pigmente sind allgemein im Handel üblich.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, zum Beispiel Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.%, bezogen auf das Gewicht der Mischung A bis F, einsetzbar.

Als eine besonders bevorzugte Komponente E wird den erfindungsgemäßen Formmassen Kupfer-(I)-chlorid, Kupfer-(I)-bromid oder Kupfer-(I)-iodid oder deren Mischungen zugesetzt. Bevorzugt wird Kupfer-(I)-iodid verwendet. Die dabei eingesetzte Menge beträgt im allgemeinen 0,01 bis 1,0, vorzugsweise 0,01 bis 0,5 Gew.-% bezogen auf das Gesamtgewicht von A bis F.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Gleit- und Entformungsmittel, die in der Regel in Mengen bis zu 1 Gew.% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Als weitere Zusatzstoffe kommen Nukleierungsmittel wie beispiels-weise Talkum in Betracht.

### Komponente F

Der Anteil der Komponente F an den erfindungsgemäßen Formmassen beträgt von 0,1 bis 30 Gew.-%, bezogen auf die Gesamtmasse der Komponenten A bis F. Bevorzugt ist die Komponente F von 0,2 bis 20, insbesondere von 0,5 bis 10 Gew.-%, jeweils bezogen auf die Gesamtmasse der Komponenten A bis F, in den erfindungsgemäßen Formmassen enthalten.

Bei der Komponente F handelt es sich um thermotrope Polymere. Unter thermotropen Polymeren werden solche Polymere verstanden, die in einem bestimmten Temperaturbereich flüssig-kristalline Eigenschaften aufweisen. Besonders geeignete Komponenten F enthalten thermotrope Polymere, die in dem Temperaturbereich, in dem die erfindungsgemäßen Formmassen verarbeitet werden, flüssig-kristallin sind. Die Übergangstemperatur Tₖ von der flüssig-kristallinen Phase in die Schmelze der als Komponente F geeigneten Polymere liegt im allgemeinen bei 350°C oder darunter. Bevorzugte flüssig-kristalline Polymere F haben Übergangstemperaturen Tₖ von 300°C oder darunter. Insbesondere betragen die Übergangstemperaturen Tₖ von 200 bis 350°C.

Als Komponente F kommen in der Regel thermotrope Polyester, thermotrope Polyesteramide oder thermotrope Polyamide in Betracht.

Bevorzugt werden vollaromatische Polyester oder Copolyester als Komponente F eingesetzt. Geeignete flüssig-kristalline Polymere haben z.B. wiederkehrende Einheiten der Struktur 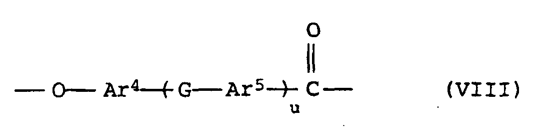 oder 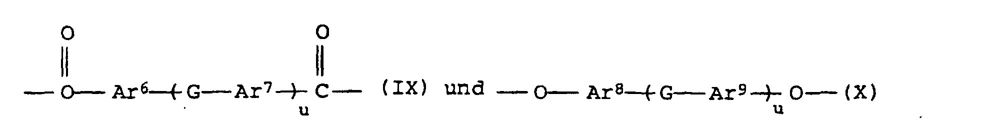 oder (VIII und IX) oder (VIII und X) oder (VIII und IX und X).

### Dabei stehen

Ar⁴ bis Ar⁹ unabhängig voneinander jeweils für eine Arylengruppe, die 6 bis 18 Kohlenstoffatome haben können, wie Phenylen, Naphthylen oder Biphenylen. Die Arylengruppen können unsubstituiert sein oder Substituenten tragen. Zu diesen Substituenten zählen C₁-C₁₀-Alkylreste wie Methyl, n-Propyl, n-Butyl oder t-Butyl sowie C₁-C₄-Alkoxygruppen, wie Methoxy, Ethoxy oder Butoxy. Daneben können die Substituenten auch Phenylreste oder Halogenatome, insbesondere Chlor sein. Die Variable
- u: kann den Wert 0 oder 1 annehmen und
- G: bedeutet SO₂ oder einen 1,4-Benzochinonrest.

Beispielsweise leiten sich derartige Polyester ab von einem oder mehreren der folgenden monomeren Bausteine: p-Hydroxybenzoesäure, m-Hydroxybenzoesäure, Terephthalsäure, Isophthalsäure, Hydrochinon, Phenylhydrochinon, alkylsubstituierte Hydrochinone, insbesondere 2-Methylhydrochinon, 2-Ethylhydrochinon, 2-n-Propylhydrochinon, 2-i-Propylhydrochinon, 2-t-Butylhydrochinon, halogensubstituierte Hydrochinone, insbesondere 2-Chlorchydrochinon.

Weitere Beispiele geeigneter Monomerer sind 4,4'-Dihydroxydiphenylether, 1,3-Dihydroxybenzol, 4,4'-Biphenol, 2,6,2',6'-Tetramethylbiphenol, 2,6-Dihydroxynaphthalin, 2,7-Dihydroxynaphthalin, 2,6-Naphthalindicarbonsäure, 6-Hydroxy-2-Naphthalincarbonsäure, 4,4'-Bis-(p-hydroxyphenoxy)diphenylsulfon, 2,6-Dihydroxyanthrachinon, 4,4'-Diphenyletherdicarbonsäure oder 4,4'-Dihydroxybenzophenon.

Ebenfalls geeignet sind Polyester, die sich von obengenannten Dicarbonsäuren und aliphatischen oder cycloaliphatischen Polyolen, bevorzugt Diolen, ableiten. Als Diole kommen Verbindungen gemäß Formel (XI)

HO-R¹³-OH (XI)

in Betracht, wobei R¹³ für C₂-C₁₈-Alkyleneinheiten, bevorzugt C₂-C₁₀-Alkyleneinheiten, in substituierter oder unsubstituierter Form steht, also beispielsweise Ethylen, Propylen, Butylen, Pentylen, oder Hexylen. Besonders bevorzugt ist je eine der beiden Hydroxygruppen an das erste bzw. letzte Kohlenstoffatom der längsten Kohlenstoffkette gebunden. R¹³ kann außerdem einen cycloaliphatischen, unsubstituierten oder substituierten, Rest mit 3 bis 12 Kohlenstoffatomen, bevorzugt 5 bis 8 Kohlenstoffatomen, wie beispielsweise Cyclopropylen, Cyclopentylen oder Cyclohexylen darstellen. Bevorzugte Diole sind Ethylenglykol, 1,4-Butandiol, 2,2-Dimethyl-1,3-propandiol, 1,6-Hexandiol, 1,10-Decandiol und 1,4-Cyclohexandimethanol.

Besonders bevorzugte erfindungsgemäße Formmassen enthalten als Komponente F flüssig-kristalline Copolyester mit wiederkehrenden Einheiten der Struktur 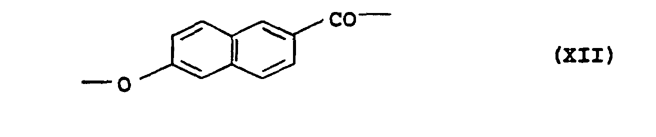 und

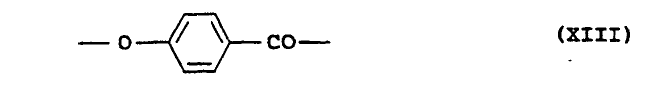

Im allgemeinen enthalten diese Copolyester 10 bis 90 Mol-% der Einheiten (XII) und 10 bis 90 Mol-% der Einheiten (XIII).

Des weiteren kommen als flüssig-kristalline Polymere F auch Polyesteramide in Betracht, die wiederkehrende Einheiten der Struktur 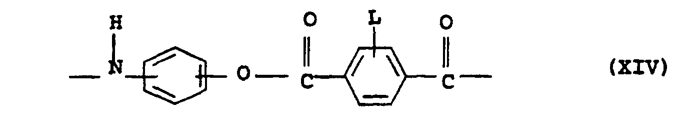 allein oder in Kombination mit anderen Einheiten wie IX, X oder XI enthalten. Der Rest L kann Wasserstoff, C₁-C₁₀-Alkyl, z.B. Methyl, Ethyl, n-Propyl, i-Propyl oder n-Butyl, bevorzugt Methyl, C₁-C₁₀-Alkoxy wie Methoxy, Ethoxy, n-Propoxy, i-Propoxy oder n-Butoxy, bevorzugt Methoxy oder Halogen, bevorzugt Chlor bedeuten.

Die Molekulargewichte M_{w} (Gewichtsmittelwert) der als Komponente F erfindungsgemäß verwendeten flüssig-kristallinen Polymeren betragen im allgemeinen von 1500 bis 150000 g/mol, bevorzugt von 2500 bis 50000 g/mol.

Derartige flüssig-kristalline Polymere sind an sich bekannt oder können nach bekannten Methoden hergestellt werden.

Geeignete Verfahren zur Herstellung werden beispielsweise in der US-A-4 161 470 erwähnt. Weitere Herstellverfahren können z.B. der EP-A 139 303, 226 839, 226 978, 225 539, 226 847 und der 257 558 entnommen werden, auf die hier wegen näherer Einzelheiten verwiesen sei.

Die erfindungsgemäßen Formmassen können nach an sich bekannten Verfahren, beispielsweise mittels Extrusion, hergestellt werden.

Die Formmassen können z.B. hergestellt werden, indem man die Ausgangskomponenten in üblichen Mischvorrichtungen wie Schneckenextrudern, vorzugsweise Zweischneckenextrudern, Brabender-Mühlen oder Banbury-Mühlen sowie Knetern mischt und anschließend extrudiert. Üblicherweise wird das Extrudat nach der Extrusion abgekühlt und zerkleinert.

Die Reihenfolge der Mischung der Komponenten kann variiert werden, so können zwei oder ggf. drei Komponenten vorgemischt werden, es können aber auch alle Komponenten gemeinsam gemischt werden.

Um eine möglichst homogene Formmasse zu erhalten, ist eine intensive Durchmischung vorteilhaft. Dazu sind im allgemeinen mittlere Mischzeiten von 0,2 bis 30 Minuten bei Temperaturen von 280 bis 370°C, bevorzugt 290 bis 360°C, erforderlich.

Die erfindungsgemäßen Formmassen zeichnen sich bei guten mechanischen Eigenschaften, wie beispielsweise hoher Wärmeformbeständigkeit, Kerbschlagzähigkeit oder Steifigkeit, vor allem durch ihre verbesserte Verarbeitungsstabilität, insbesondere Schmelzestabilität, und ihre verbesserten Fließeigenschaften aus.

Die erfindungsgemäßen Formmassen eignen sich zur Herstellung von Formteilen, Folien oder Fasern, die beispielsweise als Haushaltsartikel, elektrische oder elektronische Bauteile oder medizinisch-technische Geräte verwendet werden. Sie eignen sich insbesondere für die Herstellung von Formteilen im Fahrzeugsektor, insbesondere im Automobilbereich. Beispielhaft sind Saugrohre, Wasserkästen, Gehäuse, Lüftungsrohre, Befestigungsteile, Manschetten oder Lüfterräder zu nennen.

### Beispiele

### Untersuchungsmethoden:

Die Viskositätszahl (VZ [ml/g]) der Polyarylenethersulfone wurde in 1 gew.-% iger Lösung von N-Methylpyrrolidon bei 25 °C ermittelt.

Die Viskosiätszahl (VZ [ml/g]) der Polyamide wurde nach DIN 53 727 an 0,5 gew-% iger Lösung in 96 gew-%iger Schwefelsäure bei 25 °C bestimmt.

Der Anteil der Säuregruppen in den Polyarylenethersulfonen a2 wurde wie bei I.W. Parsons et. al., Polymer 34, 2836 (1993) beschrieben, durch ¹H-NMR-Spektroskopie bestimmt.

Die Glasübergangstemperatur T_{g} und der Schmelzpeak wurden anhand von DSC-Messungen von Proben im zweiten Aufheizcyclus bei einer Aufheizrate von 20 K/min bestimmt.

Die Wärmeformbeständigkeit der Proben wurde mittels der Vicat-Erweichungstemperatur (Vicat B [°C]) ermittelt. Diese wurde nach DIN 53 460 mit einer Kraft von 49,05 N und einer Temperatursteigerung von 50 K/h an Normkleinstäben ermittelt.

Die Kerbschlagzähigkeit (aₖ [kJ/m²]) wurde an ISO-Stäben nach ISO 179 1eA bestimmt.

Die Steifigkeit (E-Modul) wurde nach DIN 53 457 bestimmt.

Die Fließfähigkeit (MVI [ml/10']) wurde nach DIN 53 735 bei 300°C und einer Belastung von 10 kg bestimmt.

Als Maß für die Schmelzestabilität wurde in einem Kapillarrheometer bei 350°C die Änderung der Viskosität über einen Zeitraum von 30 Minuten verfolgt. Angegeben wird der prozentuale Abfall der Viskosität nach 30 Minuten bezogen auf das Ausgangsniveau (Δη [%]).

### Herstellung der Formmassen

### Komponente A

### a1) gegenüber Polyamiden inertes Polyarylenethersulfon

Als Polyarylenethersulfon A1 wurde eines mit wiederkehrenden Einheiten der Formel I₁ verwendet, Ultrason® E 2010, Handelsprodukt der BASF AG. Dieses Produkt ist charakterisiert durch eine viskositätszahl von 54 ml/g, gemessen in 1 %-iger NMP-Lösung bei 25°C.

### a2) gegenüber Polyamiden reaktionsfähiges, funktionalisiertes Polyarylenethersulfon

### Komponente A2 wurde wie folgt hergestellt:

Unter Stickstoffatmosphäre wurden 5,742 kg Dichlordiphenylsulfon, 5,076 kg Dihydroxydiphenylsulfon und 305,8 g 4,4'-Di-hydroxyvaleriansäure in 29 kg N-Methylpyrrolidon gelöst und mit 2,820 kg wasserfreiem Kaliumcarbonat versetzt. Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt.

Nach Zugabe von 40 kg N-Methylpyrrolidon wurden die anorganischen Bestandteile abfiltriert. Durch Zugabe von 300 ml Eisessig wurden basische Gruppen neutralisiert, anschließend wurde das Polymere durch Fällung in Wasser isoliert. Nach 3-maliger Extraktion mit Wasser wurde das Produkt bei 140°C im Vakuum getrocknet. Es wurde ein weißes Pulver erhalten.

Der Anteil an Einheiten mit Säuregruppen wurde mittels ¹H-NMR zu 3,0 mol-% bestimmt, die Viskositätszahl des Produkts betrug 40,2 ml/g.

### Komponente A3 wurde wie folgt hergestellt:

Unter Stickstoffatmosphäre wurden 4,593 kg Dichlordiphenylsulfon, 4,002 kg Dihydroxydiphenylsulfon in 29 kg N-Methylpyrrolidon gelöst und mit 2,923 kg wasserfreiem Kaliumcarbonat versetzt.

Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt.

Nach dieser Zeit wurden 235 g 4-Fluorphthalsäureanhydrid der Mischung zugesetzt und die Reaktion 0,2 h bei 190°C weitergeführt.

Nach Zugabe von 40 kg N-Methylpyrrolidon wurden die anorganischen Bestandteile abfiltriert, anschließend wurde das Polymere durch Fällung in Wasser isoliert. Nach 3-maliger Extraktion mit Wasser wurde das Produkt bei 160°C im Vakuum getrocknet. Es wurde ein weißes Material erhalten.

Der Gehalt an Phthalsäureanhydridendgruppen betrug 0,83 Gew.-%, die Viskositätszahl des Polyarylenethers betrug 49,7 ml/g.

### Komponente B

Als Polyamid B1 wurde ein teilaromatisches Copolyamid, kondensiert aus 55 Gew.-Teilen Terephthalsäure, 35 Gew.-Teilen ε-Caprolactam und 38,5 Teilen Hexamethylendiamin, charakterisiert durch eine Viskositätszahl von 210 ml/g, eingesetzt. Dieses Produkt ist des weiteren durch eine Glasübergangstemperatur von 110°C und einer Schmelztemperatur von 289°C charakterisiert.

Als Polyamid B2 wurde ein Polyamid 6, erhalten aus ε-Caprolactam, mit einer Viskositätszahl von 250 ml/g verwendet (Ultramid®B4, Handelsprodukt der BASF AG).

Als Polyamid B3 wurde ein Polyamid 6, erhalten aus ε-Caprolactam, mit einer Viskositätszahl von 140 ml/g verwendet.

### Komponente C

Als Füllstoff C1 wurden Schnittglasfasern mit Polyurethanschlichte, Faserdurchmesser 10 µm, eingesetzt.

### Komponente E:

Als Stabilisator E1 wurde Kupferiodid, CuI, verwendet.

### Komponente F:

Als thermotropes Polymer F1 wird ein flüssig-kristalliner Copolyester mit wiederkehrenden Einheiten der Formeln XII und XIII, charakterisiert durch einen E-Modul von 10,4 kN/mm² und einer mittels DSC bestimmten Übergangstemperatur Tₖ von ca. 280°C (z.B. Handelsprodukt Vectra® A 950 der Firma Ticona), verwendet.

Die Komponenten wurden in einem Zweiwellenextruder bei einer Massetemperatur von 300 bis 350°C gemischt. Die Schmelze wurde durch ein Wasserbad geleitet und granuliert.

Die Formmassen wurden bei 340°C verarbeitet. Die Formtemperatur war jeweils 100°C.

Die Zusammensetzung der Formmassen und die Ergebnisse der Prüfungen sind in der Tabelle 1 aufgeführt.

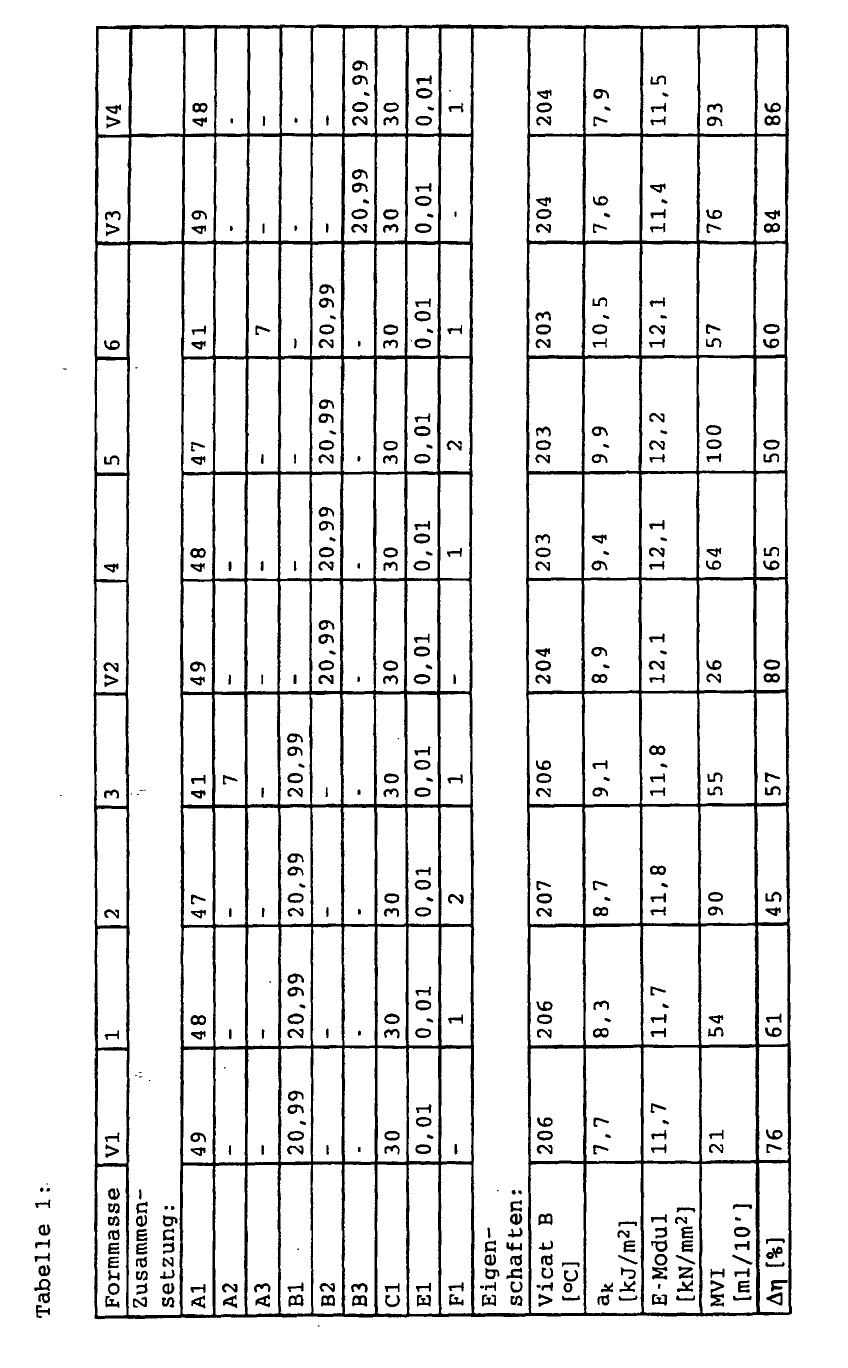

Die erfindungsgemäßen thermoplastischen Formmassen weisen bei sehr guten mechanischen Eigenschaften deutlich verbesserte Fließeigenschaften und Schmelzestabilität auf.

## Patentansprüche

1. Formmassen, enthaltend
A) 1 bis 98,8 Gew.-% mindestens eines Polyarylenethersulfons,
B) 1 bis 98,8 Gew.-% mindestens eines thermoplastischen Polyamids,
C) 0,1 bis 60 Gew.-% mindestens eines Füllstoffs,
D) 0 bis 40 Gew.-% mindestens eines schlagzähmodifizierenden Kautschuks,
E) 0 bis 40 Gew.-% eines oder mehrerer unterschiedlicher Zusatzstoffe und
F) 0,1 bis 30 Gew.-% mindestens eines thermotropen Polymers,
wobei die Gewichtsprozente der Komponenten A bis F zusammen 100% ergeben, **dadurch gekennzeichnet, daß** die Komponente B eine Viskositätszahl von 180 bis 350 ml/g (gemessen in 0,5 gew.-%iger Lösung in 96 gew.-%iger Schwefelsäure gemäß DIN 53 727) aufweist.

2. Formmassen nach Anspruch 1, worin die Polyarylenethersulfone A
0 bis 100 Mol-% wiederkehrende Einheiten 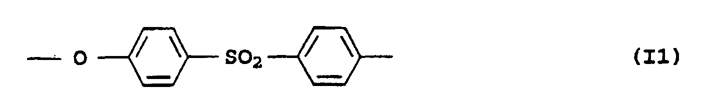 und
0 bis 100 Mol-% wiederkehrende Einheiten 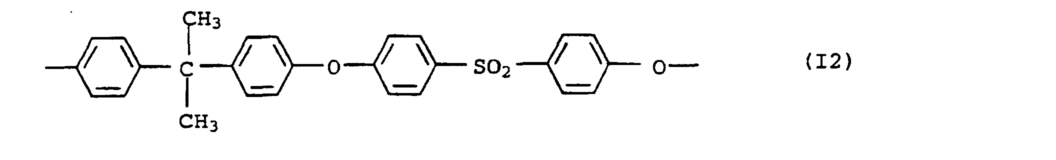 enthalten.

3. Formmassen nach Ansprüchen 1 oder 2, worin A eine Mischung aus mindestens einem Polyarylenethersulfon a1 mit Gruppen, die sich gegenüber den Polyamiden B inert verhalten, und mindestens einem Polyarylenethersulfon a2, das Gruppen enthält, die mit den Polyamiden B reagieren können, ist.

4. Formmassen nach Ansprüchen 1 bis 3, worin die Gruppen der Polyarylenethersulfone a2, die mit den Gruppen der Polyamide B reagieren können, Anhydrid-, Carboxyl-, Epoxid- oder Aminogruppen oder Mischungen davon sind.

5. Formmassen nach Ansprüchen 1 bis 4, worin die Komponente B ein teilaromatisches Polyamid ist.

6. Formmassen nach Ansprüchen 1 bis 4, worin die Komponente B ein aliphatisches Polyamid ist.

7. Formmassen nach den Ansprüchen 1 bis 6, wobei mindestens eine Komponente E in einer Menge von 0,01 bis 0,5 Gew.-%, bezogen auf das Gesamtgewicht von A bis F, enthalten ist, die aus Kupfer (I)-chlorid, Kupfer(I)-bromid, Kupfer(I)-iodid oder einer Mischung dieser Verbindungen besteht.

8. Formmassen nach den Ansprüchen 1 bis 7, in denen die Komponente F ein thermotroper Polyester, ein thermotropes Polyesteramid oder thermotropes Polyamid ist.

9. Formmassen nach einem der Ansprüche 1 bis 8, in denen die Komponente F ein thermotroper Copolyester enthaltend wiederkehrenden Einheiten der Strukturen 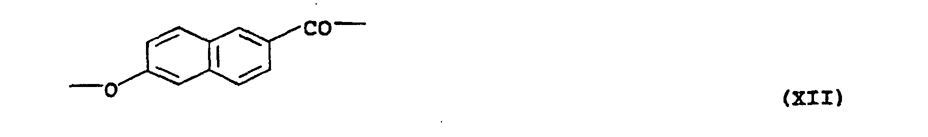 und 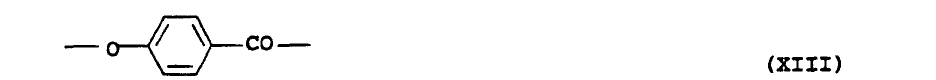 ist.

10. Verwendung der Formmassen gemäß den Ansprüchen 1 bis 9 zur Herstellung von Formteilen, Folien und Fasern.

11. Formteile, Folien und Fasern, erhältlich aus den Formmassen gemäß den Ansprüchen 1 bis 9.

## Claims

1. A molding composition comprising
A) from 1 to 98.8% by weight of at least one polyarylene ether sulfone,
B) from 1 to 98.8% by weight of at least one thermoplastic polyamide,
C) from 0.1 to 60% by weight of at least one filler,
D) from 0 to 40% by weight of at least one impact-modifying rubber,
E) from 0 to 40% by weight of one or more different additives, and
F) from 0.1 to 30% by weight of at least one thermotropic polymer,
where the total of the percentages by weight of components A to F is 100%, wherein component B has a viscosity number of from 180 to 350 ml/g (measured in 0.5% strength by weight solution in 96% strength by weight sulfuric acid to DIN 53 727).

2. A molding composition as claimed in claim 1, in which the polyarylene ether sulfone A
contains
from 0 to 100 mol% of repeat units 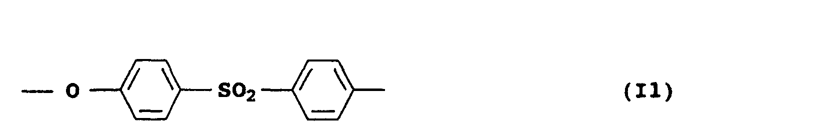 and
from 0 to 100 mol% of repeat units

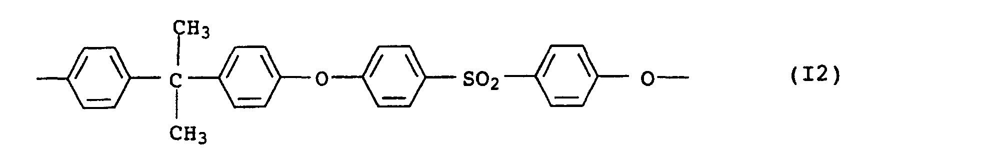

3. A molding composition as claimed in claim 1 or 2, where A is a mixture made from at least one polyarylene ether sulfone a1 having groups which are inert to the polyamides B and from at least one polyarylene ether sulfone a2 which contains groups which can react with the polyamides B.

4. A molding composition as claimed in any of claims 1 to 3, wherein the polyarylene ether sulfones a2 the groups which can react with the groups in the polyamides B are anhydride, carboxyl, epoxy or amino groups or a mixture of these.

5. A molding composition as claimed in any of claims 1 to 4, where component B is a partly aromatic polyamide.

6. A molding composition as claimed in any of claims 1 to 4, where component B is an aliphatic polyamide.

7. A molding composition as claimed in any of claims 1 to 6, which comprises from 0.01 to 0.5% by weight, based on the total weight of A to F, of at least one component E which is composed of copper(I) chloride, copper(I) bromide, copper(I) iodide or a mixture of these compounds.

8. A molding composition as claimed in any of claims 1 to 7, in which component F is a thermotropic polyester, a thermotropic polyesteramide or a thermotropic polyamide.

9. A molding composition as claimed in any one of claims 1 to 8, in which component F is a thermotropic copolyester containing repeat units of the structures 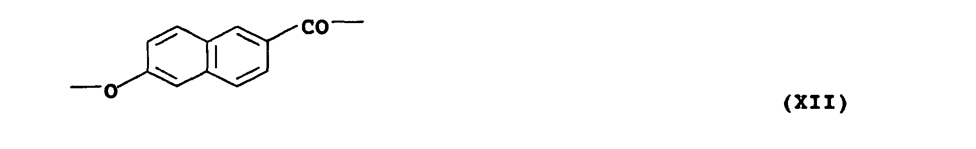 and

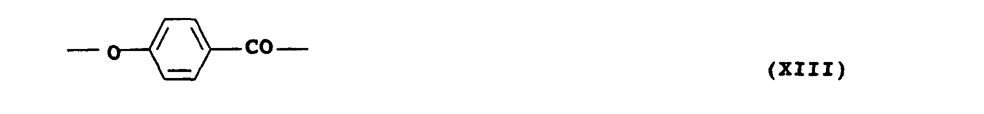

10. The use of the molding compositions as claimed in any of claims 1 to 9 for producing moldings, films or fibers.

11. A molding, a film or a fiber obtainable from the molding compositions as claimed in any of claims 1 to 9.

## Revendications

1. Masses de moulage contenant
A) de 1 à 98,8% en poids d'au moins une polyarylène-éthersulfone,
B) de 1 à 98,8% en poids d'au moins un polyamide thermoplastique,
C) de 0,1 à 60% en poids d'au moins une matière de remplissage,
D) de 0 à 40% en poids d'au moins un caoutchouc modificateur de la résistance au choc,
E) de 0 à 40% en poids d'un ou plusieurs additifs différents et
F) de 0,1 à 30% en poids d'au moins un polymère thermotrope,
où les pourcentages en poids des composants A à F totalisent 100%, **caractérisées en ce que** le composant B présente un indice de viscosité de 180 à 350 ml/g (mesuré dans une solution à 0,5% en poids dans de l'acide sulfurique à 96% en poids selon DIN 53 727).

2. Masses de moulage selon la revendication 1, dans lesquelles les polyarylène-éthersulfones A contiennent
de 0 à 100% molaires d'unités répétitives 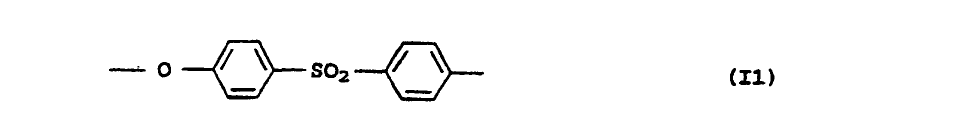 et
de 0 à 100% molaires d'unités répétitives

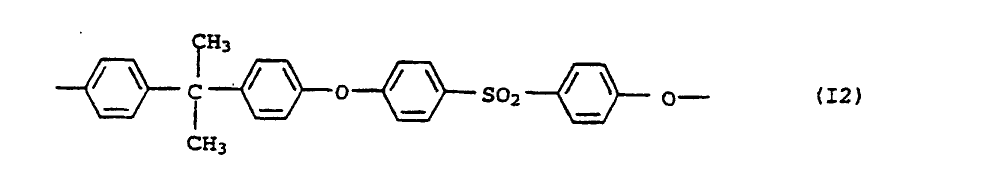

3. Masses de moulage selon la revendication 1 ou 2, dans lesquelles A est un mélange constitué d'au moins une polyarylène-éthersulfone a1 comportant des groupes qui se comportent de manière inerte vis-à-vis des polyamides B, et d'au moins une polyarylène-éthersulfone a2 contenant des groupes capables de réagir avec les polyamides B.

4. Masses de moulage selon les revendications 1 à 3, dans lesquelles les groupes de la polyarylène-éthersulfone a2 capables de réagir avec les polyamides B sont des groupes anhydride, carboxyle, époxyde ou amino, ou des mélanges de ceux-ci.

5. Masses de moulage selon les revendications 1 à 4, dans lesquelles le composant B est un polyamide partiellement aromatique.

6. Masses de moulage selon les revendications 1 à 4, dans lesquelles le composant B est un polyamide aliphatique.

7. Masses de moulage selon les revendications 1 à 6, dans lesquelles au moins un composant E est présent en une quantité de 0,01 à 0,5% en poids, par rapport au poids total de A à F, et consiste en chlorure de cuivre(I), bromure de cuivre (I), iodure de cuivre(I), ou en un mélange de ces composés.

8. Masses de moulage selon les revendications 1 à 7, dans lesquelles le composant F est un polyesteramide thermotrope ou un polyamide thermotrope.

9. Masses de moulage selon l'une quelconque des revendications 1 à 8, dans lesquelles le composant F est un copolyester thermotrope contenant des unités répétitives des structures 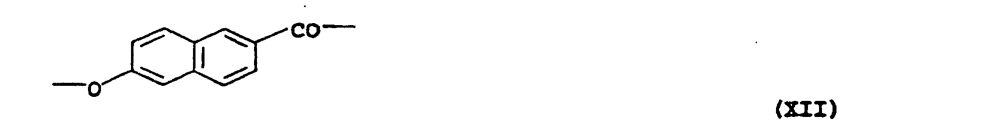 et

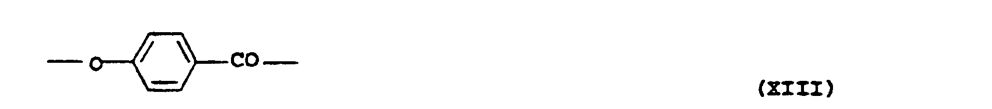

10. Utilisation des masses de moulage selon les revendications 1 à 9 pour la préparation de pièces moulées, de feuilles et de fibres.

11. Pièces moulées, feuilles et fibres que l'on peut obtenir à partir des masses de moulage selon les revendications 1 à 9.
